# EUROPEAN PATENT SPECIFICATION

(11) **EP 2 133 436 B1**
(45) Date of publication and mention of the grant of the patent: **14.11.2018**
(21) Application number: 08740220.2
(22) Date of filing: 04.04.2008
(51) Int. Cl.: C21D 9/56, C21D 8/12, C21D 9/46, C21D 9/60, F27B 9/28, F27B 9/36

(54) **METHOD OF CONTINUOUS ANNEALING FOR STEEL STRIP WITH CURIE POINT AND CONTINUOUS ANNEALING APPARATUS THEREFOR**
DURCHLAUFGLÜVERFAHREN FÜR BANDSTAHL MIT CURIE-PUNKT UND DURCHLAUFGLÜHGERÄT DAFÜR
PROCÉDÉ DE RECUIT CONTINU POUR FEUILLARD D'ACIER À POINT DE CURIE, ET APPAREIL DE RECUIT CONTINU POUR CELUI-CI

(30) Priority: 05.04.2007 JP 2007099238; 18.03.2008 JP 2008070241
(43) Date of publication of application: 16.12.2009
(73) Proprietor: Nippon Steel & Sumitomo Metal Corporation, Tokyo 100-8071 (JP)
(72) Inventor: KOGA, Shigenobu, Tokyo 100-8071 (JP); KATAOKA, Takaharu, Tokyo 100-8071 (JP); HAMAYA, Tsuyoshi, Tokyo 100-8071 (JP); MOCHINAGA, Hiroaki, Tokyo 100-8071 (JP); ATAKE, Makoto, Tokyo 100-8071 (JP)
(74) Representative: Vossius & Partner Patentanwälte Rechtsanwälte mbB
(86) International application number: PCT/JP2008/057122
(87) International publication number: WO 2008/126911

(56) References cited:
- WO-A1-98/11761
- JP-A- 07 118 754
- JP-A- 08 199 310
- JP-A- 2000 503 462
- JP-A- 2002 060 842
- JP-A- 2005 120 409
- JP-A- 2005 209 608
- US-A- 3 421 925

## Description

The present invention relates to a method for continuous annealing of a steel strip having a Curie point (also expressed as a "Curie temperature Tc") and a continuous annealing facility of the same. In particular, it relates to a method of continuous annealing of a steel strip having a Curie point by an annealing temperature exceeding the Curie point and to a continuous annealing facility of the same enabling uniform annealing along a longitudinal direction of a steel strip.

Note that, as the steel strip having a Curie point treated by the method of continuous annealing and continuous annealing facility of the present invention, a grain-oriented electrical steel sheet containing Si≤4.5 mass% or a ferrite type stainless steel sheet, martensite type stainless steel sheet, and the like containing Cr≤18 mass% may be mentioned.

In continuous annealing of a steel strip and other metal strips, in general, the heating temperature, heating time, and the like are strictly controlled. In particular, there are cases where strict temperature control is demanded such as in the decarburization annealing step of the process of production of low core-loss grain-oriented electrical steel sheet preferable for applications as the cores of transformers and other electrical devices.

This is because in the production of grain-oriented electrical steel sheet, there are (a) the problem that the heating temperature varies in decarburization annealing and if the soaking temperature is slow to be arrived at, the time spent on decarburization is reduced by that amount and the decarburization becomes worse, (b) the problem that overshooting occurs at the time of heating and if the target soaking temperature is exceeded for even an extremely short period of time, the oxidized layer formed at the early stage obstructs decarburization to cause deteriorated decarburization or invite coating defects, etc.

As inventions relating to this sort of annealing temperature control, there are the following:
Japanese Patent Publication No. (A) 10-324922 (Document 1) discloses an invention relating to a method and apparatus for decarburization annealing of a grain-oriented electrical steel sheet heating a steel sheet up to a temperature of 550 to 650°C by a gas heating system using radiant tubes having a high heating ability, then heating from the above temperature until reaching the soaking temperature using tube-shaped heaters having a large heat generating density comprised of densely arranged heat generating resistance members. In this invention, regardless of the furnace being large in processing ability, flexible response to a wide range of changes in steel sheet size is possible, overshooting and undershooting in heating are eliminated, and thereby stable decarburization annealing becomes possible.
Japanese Patent Publication (A) No. 2003-328039 (Document 2) discloses an invention relating to a method of continuous annealing of steel sheet and applying an inductioh heating device for changing the sheet temperature of a condition changer so as to enable smooth change of annealing conditions from a preceding material to a following material having different annealing conditions.
Japanese Patent Publication (B2) No. 06-051887 (Document 3) discloses an invention for decarburization annealing of grain-oriented electrical steel sheet during which rapidly heating a cold rolled steel strip at a heating rate of 230°C/se or more to a 705°C or more temperature so as to enable reduction of the core loss. Examples 2 and 3 disclose a heating operation performed using a special electromagnetic induction heating coil with a basic frequency of 450 kHz which provides a heating rate of 1100 or 1200°C/sec to the Curie point of 746°C.
Japanese Patent Publication (A) No. 2006-206927 (Document 4) discloses an invention that solves problems, such as the variation in mechanical properties and shape defects of steel sheet caused by the uneven temperature that occurs easily because of the high cooling characteristics when employing accelerated cooling in a process of production of thick-gauge steel sheet and the slit camber resulting from residual stress, by carrying out heat treatment using an induction heating apparatus setting a heating target temperature of the steel sheet after accelerated cooling at a magnetic transformation temperature (Curie point) of the steel material or 700 to 760°C to thereby raise the temperature uniformity in the steel sheet and then hot straightening the sheet.

However, Document 1 does not describe changes of the heating characteristics of the steel strip itself in the longitudinal direction of the steel strip. As clear from this, in the invention as set forth in Document 1, there was the problem that it was impossible to avoid the problem of lack of uniformity of the heating characteristics in the longitudinal direction originating from fluctuations in the temperature history in the longitudinal direction when actually hot rolling a steel strip and the resultant problem of the variation in the characteristics of the steel strip along the longitudinal direction arising as a result.

For example, the problem of the poor uniformity of decarburization or the problem of coating defects of grain-oriented electrical steel sheet in the longitudinal direction or the problem of poor uniformity of mechanical strength of a ferrite type stainless steel sheet and a martensite type stainless steel sheet in the longitudinal direction could not be solved by the invention set forth in Patent Document 1."

Further, the invention set forth in Document 2 has as its object the smooth changing of annealing conditions from a preceding material to a following material having different annealing conditions and in no way describes uniform heating of a steel strip along the longitudinal direction.

Further, the invention set forth in Document 3 discloses the application of rapid heating by electromagnetic induction heating for heating of an electrical steel sheet up to the Curie point of decarburization annealing to improve the core loss of electrical steel sheet, however in no way discloses temperature uniformity along the longitudinal direction of steel strip.

Further, the invention set forth in the above Document 4 discloses that if applying heat treatment making the heating target temperature of the induction heating apparatus the electromagnetic transformation temperature (Curie point) of the steel material or 700 to 760°C, it is possible to improve the temperature uniformity in the steel sheet, however in no way discloses or suggests whether it is possible to apply this to the continuous annealing of a steel strip where the annealing temperature exceeds the Curie point so as to increase the temperature uniformity in the steel sheet.

WO 98/11761 A discloses induction heaters to improve transitions between the strips having different dimensions in continuous heating systems and method.

US 3 421 925 A discloses a method for producing improved metallic strip material.

JP 2005-209608 A discloses a method of induction heating using a solenoid coil.

Thus, the present invention has as its object to provide a method of continuously annealing a steel strip having a Curie point and a continuous annealing facility of the same capable of heating a steel strip having a Curie point extremely uniformly in the longitudinal direction until an annealing temperature which exceeds the Curie point.

The above object can be achieved by the features defined in the claims.

According to the present invention, when heating a steel strip having a Curie point to an annealing temperature exceeding the Curie point, it is possible to heat the steel strip extremely uniformly in the longitudinal direction.

In the continuous annealing of a cold rolled steel strip of a grain-oriented silicon steel sheet, a ferrite type stainless steel strip, a martensite type stainless steel strip, and the like, strict control and uniformity of the rate of temperature elevation of the steel sheet are sought. By applying the present invention to such continuous annealing of steel strip, a large effect of improvement of quality can be achieved by the increased uniformity of the annealing temperature.

The invention is described in detail in conjunction with the drawings, in which:
FIG. 1 is a view schematically showing a typical continuous heat treatment facility for decarburization annealing (including coating an annealing separating agent) of a cold rolled sheet of grain-oriented silicon steel by an isometric projection,
FIG. 2 is a view schematically showing a typical configuration according to the prior art of a furnace 12 in FIG. 1 by a cross-sectional view vertical to the longitudinal direction,
FIG. 3 is a view showing an example of the longitudinal direction transition of the sheet temperature of a steel strip measured at three representative locations inside of the heating region 31 of FIG. 2 according to the prior art,
FIG. 4 is a view schematically showing a configuration according to an embodiment of the present invention of a furnace 12 in FIG. 1 by a cross-sectional view vertical to the longitudinal direction,
FIG. 5 is a view showing an example of the longitudinal direction transition of a sheet temperature of a steel strip measured at exit sides of heating regions 31A, 35, and 31B of FIG. 4 according to the present invention,
FIG. 6 is a view schematically showing a typical continuous heat treatment facility for bright annealing of a cold rolled sheet of ferrite type stainless steel by an isometric projection,
FIG. 7 is a view schematically showing a typical configuration according to the prior art of a furnace 12 in FIG. 6 by a cross-sectional view vertical to the longitudinal direction,
FIG. 8 is a view schematically showing a configuration according to an embodiment of the present invention of a furnace 12 in FIG. 6 by a cross-sectional view vertical to the longitudinal direction,
FIG. 9 is a view schematically showing a configuration according to a different embodiment of the present invention of a furnace 12 in FIG. 4 by a cross-sectional view vertical to the longitudinal direction,
FIG. 10 is a view explaining an example of a control system of a plurality of induction heating means in the embodiment of FIG. 9,
FIG. 11 is a view showing examples of longitudinal direction transitions of the sheet temperatures of steel strips measured at exit sides of the heating regions 31A and 35B and the actual output power values of the induction heating means when operating by the control system of FIG. 10,
FIG. 12 is a view explaining a different control system of a plurality of induction heating means in the embodiment of FIG. 9, and
FIG. 13 is a view showing examples of longitudinal direction transitions of the sheet temperatures of steel strips measured at exit sides of the heating regions 31A and 35B and the actual output power values of the induction heating means when operating by the control system of FIG. 12.

The best mode for carrying out the present invention will be explained using as examples the production of grain-oriented silicon steel sheet and ferrite type stainless steel sheet where the effect of the present invention is particularly large. Note that, needless to say, the present invention is not limited to the production of grain-oriented silicon steel sheet and ferrite type stainless steel sheet.

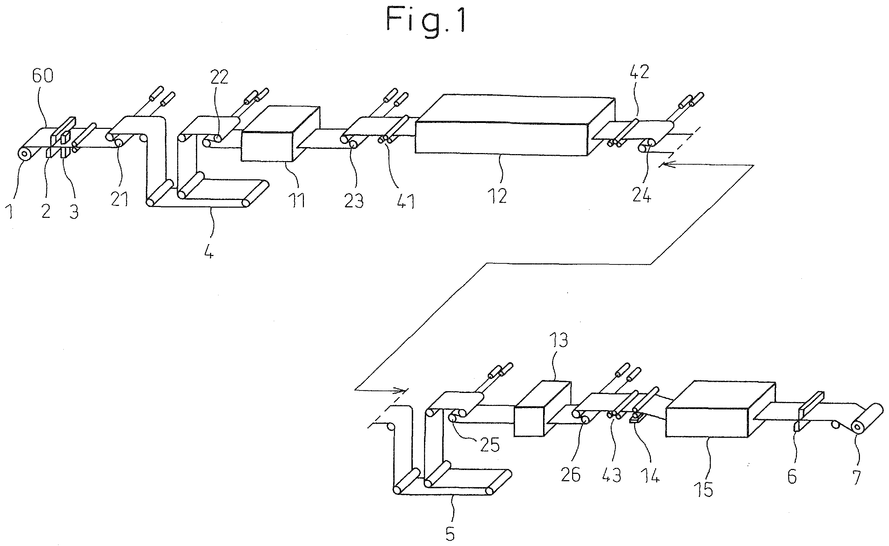

FIG. 1 is a schematic isometric projection of a typical continuous heat treatment facility for decarburization annealing (including coating an annealing separating agent) of a final cold rolled sheet of grain-oriented silicon steel.

The main elements of the production facility line include a payoff reel 1 for carrying a coil-shaped steel strip 60 of a final cold rolled grain-oriented silicon steel and paying it off from there, an entry side shear 2 for shearing off a front and tail end of the steel strip to prepare it for welding, a welder 3 for continuously joining the ends of steel strips to each other, an entry side storage looper 4 for storing the steel strip while preparing the steel strip for welding and during the welding so as to enable the steel strip to be run through an entry side cleaner 11 and furnace 12 without slowing or halting, an entry side cleaner 11 for cleaning the surface of the steel strip and removing rolling oil, iron, and other dirt, a furnace 12 comprising a heating, soaking, and cooling regions and decarburization annealing the steel strip, an exit side storage looper 5 for storing the steel strip when recoiling of a coil is finished and an exit side shear 6 is in operation so as to enable the steel strip to be run through the entry side cleaner 11 and furnace 12 without slowing or halting, an exit side cleaner 13 for cleaning the surface of the annealed steel strip emerging from the furnace and removing the furnace dirt, an annealing separating agent coater 14, an annealing separating agent dryer 15, an exit side shear 6, and a tension reel 7 for recoiling the steel strip into a coil shape.

In such a line, the annealing separating agent dryer 15 is configured as a fast response furnace comprised of a furnace material with low thermal inertia and an open flame burner. It is structured to be capable of rapidly responding to unavoidable halts and delay of steel strip in the annealing separating agent dryer 15 when the exit side shear 6 is in operation.

Further, the tension of the steel strip 60 before and after the furnace 12 is measured with tension meters 41 and 42, while the tension of the steel strip 60 at the annealing separating agent dryer 15 is measured with a tension meter 43. The measurement results are fed back to bridle rolls 23 to 26 through which the strip passes so as to secure the steel strip tension before and after the bridle rolls.

Note that, the installation of an exit side cleaner 13 is not necessarily required when the dirt on the steel strip at the furnace 12 is small.

A final cold rolled sheet of grain-oriented silicon steel is decarburization annealed (including coating of an annealing separating agent) on the above line, then is annealed at a high temperature and, further, smooth annealed to become a final product.

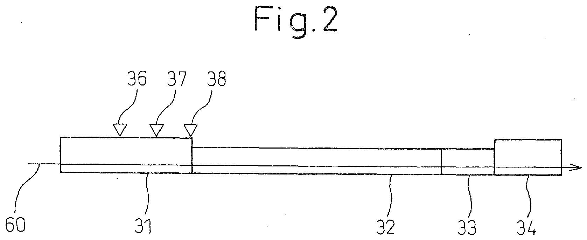

FIG. 2 is a view schematically showing a configuration of a furnace 12 according to the prior art by a cross-sectional view vertical to the longitudinal direction. The furnace 12 generally comprises a heating region 31 using a radiant tube heating system, a soaking region 32 heating with electric heaters, a nitriding region 33 heating with electric heaters, and a cooling region 34. The heating region 31 is provided with sheet thermometers 36, 37, and 38 for monitoring the sheet temperature during heating.

The steel strip 60 cleaned at its surface by the entry side cleaner 11 is heated at the heating region 31 by the radiant tube system, heated until a decarburization temperature of approximately 820°C, and decarburization annealed at the soaking zone 32 by heating by electric heaters.

In the heating region 31 using a radiant tube system, the steel strip is heated so as not to be an obstruction to decarburization. Generally, the temperature of the furnace is controlled while monitoring the sheet thermometers 36 and 37 arranged in the heating region and the sheet thermometer 38 at the exit side of the heating region.

Further, recently, systems automatically monitoring the measurement values of these sheet thermometers 36, 37, and 38 while automatically controlling the temperature of the furnace of the heating region have also been adopted.

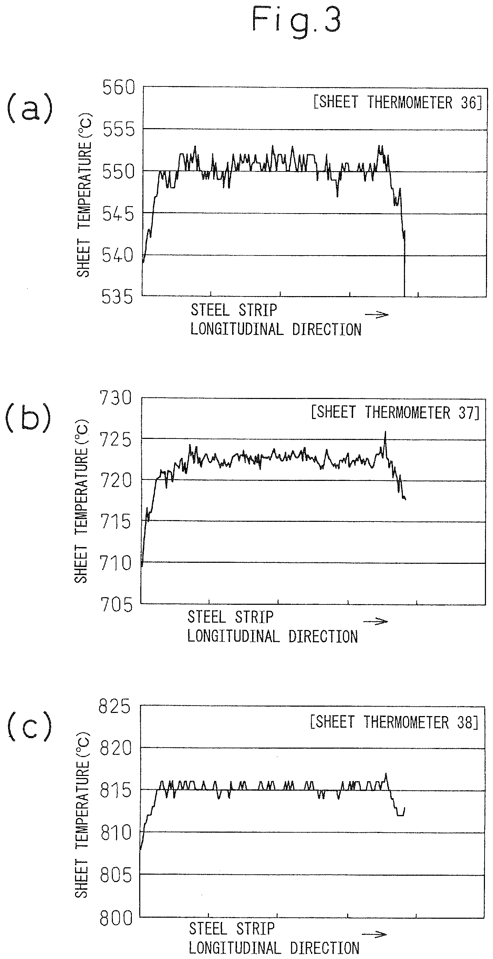

FIGS. 3(a) to (c) show an example of the temperature distribution along the longitudinal direction of one steel strip coil at the positions of the sheet thermometers 36, 37, and 38 when decarburization annealing grain-oriented electrical steel sheet with the facility of FIGS. 1 and 2 according to the prior art.

In this example, regardless of the adoption of a system automatically monitoring the measurement values of the sheet thermometers 36, 37, and 38 while automatically controlling the temperature of the furnace of the heating region, the sheet temperature of the steel strip measured with the sheet thermometer 38 at the heating regional exit side fluctuates along the longitudinal direction.

This is because the furnace has a large thermal inertia and sheet temperature fluctuations are difficult to suppress. Such fluctuations as a result have a large effect on subsequent reactions on the surface including decarburization reactions of the steel strip and invite fluctuations in the quality of the steel strip in the longitudinal direction, for example, lack of uniformity of decarburization and coating defects and other quality problems.

The inventors analyzed the sheet temperature in the process of the temperature elevation of the steel strip in the longitudinal direction and discovered that the rate of temperature elevation fluctuates quite a bit even in the longitudinal direction of the steel strip in a steel sheet coil.

The inventors further analyzed the cause of this fluctuation, whereupon they found that in a radiant tube furnace used in a continuous heating facility of steel strip, the steel sheet is heated by the radiant heat transmission between the radiant tubes and the steel strip, the amount of heat transmission determining the amount of temperature elevation of the steel sheet is determined by the emissivities and geometrical positional relationship of the radiant tubes and the steel sheet, and that, since the emissivities and geometrical positional relationship of the radiant tubes do not change in the short term, the temperature of the steel strip changes due to fluctuations of the emissivity of the steel strip.

There are many unclear points regarding the causes for the change of the emissivity of steel sheet in the longitudinal direction, however, it is guessed that it is due to the fact that the prior step in the production of cold rolled steel sheet, that is, hot rolling, is not continuous but is carried out in slab units (corresponding to steel strip coil) and the surface properties change due to the fluctuations in the sheet temperature in the longitudinal direction during the hot rolling and the lack of uniformity of the cooling process.

Further, because the emissivity of the steel sheet is used for temperature measurement of the steel sheet, the accuracy of the measurement values of the sheet temperature will worsen if the emissivity changes. While a sheet thermometer using a plurality of wavelengths has slightly improved accuracy, it cannot prevent this problem.

The inventors, further, engaged in intensive research and as a result took note of the fact that with solenoid coil type high frequency induction heating, near the Curie point, the magnetic permeability of the steel strip rapidly drops and along with this the depth of penetration also becomes larger and the heating ability of steel strip rapidly decreases, so it is possible to bring the temperature of steel strip close to a constant value without being affected by the emissivity of the steel strip in the longitudinal direction and thereby arrived at the present invention making it possible to increase the uniformity of the heating rate of steel strip in the longitudinal direction. Further, they discovered that the emissivity of the steel sheet becomes large in absolute value if over 700°C and is not easily influenced by the conditions of the surface of the comparative sheet and thereby arrived at the present invention.

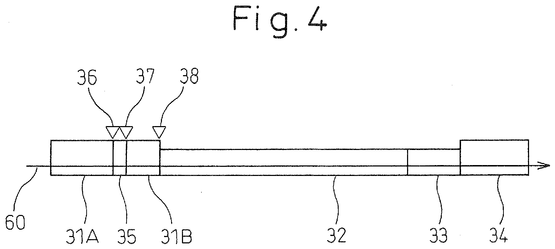

FIG. 4 is a view schematically showing a configuration of a furnace 12 of a continuous heat treatment facility (FIG. 1) for annealing a cold rolled grain-oriented silicon steel of one example of the present invention by a cross-sectional view vertical to the longitudinal direction.

Other than the furnace 12, this is the same as a conventional continuous annealing facility. In comparison to the prior art heat treatment line of FIG. 2, a solenoid coil type high frequency induction heating device 35 is arranged at the center of the heating zone. Further, sheet thermometers 36 and 37 are arranged before and after the solenoid coil type high frequency induction device 35.

The steel strip 60 is heated by the heating region (first half) 31A by a radiant tube system. After the sheet temperature reaches from 500°C to a predetermined temperature lower than the Curie point Tc (°C) by over 50°C (temperature of less than Tc-50°C), the strip is heated by a solenoid coil type high frequency induction heating device 35 to a temperature of Tc-30°C to Tc-5°C, then is heated to about 825°C at the heating region (second half) 31B by a radiant tube system and is decarburization annealed at the soaking zone 32 by heating by electric heaters.

The sheet temperature of the steel strip 60 of the entry side of the solenoid coil type high frequency induction heating device has to be made 500°C or more. If the sheet temperature is less than 500°C, the required temperature elevation by the induction heating device becomes larger. Therefore, the ability of the induction heating device would have to be made excessive which is not realistic. Further, when the heat treatment furnace atmosphere contains hydrogen, an ambient temperature of 750°C or more enabling the danger of hydrogen explosion to be avoided becomes unable to be secured.

On the other hand, when the sheet temperature is Tc-50°C or more, the heating fluctuation by radiant type heating cannot be absorbed at the peak sheet temperature at the induction heating device, so the temperature must be made less than Tc-50°C.

Further, if the sheet temperature of the steel strip 60 at the exit side of the solenoid coil type high frequency induction heating device 35 is over Tc-5°C, the magnetic permeability of the steel strip at the exit side will become too small and therefore the magnetic field required for the high frequency induction heating device will become larger and the required facility will end up becoming enormous and impractical. Further, if the sheet temperature is less than Tc-30°C, the magnetic permeability of the steel strip at the exit side will not be small and heating fluctuations by radiant type heating will not be able to be suppressed by high frequency induction heating.

Accordingly, the sheet temperature of the steel strip 60 at the exit side of the solenoid coil type high frequency induction heating device 35 has to be made a temperature region of Tc-30°C to Tc-5°C.

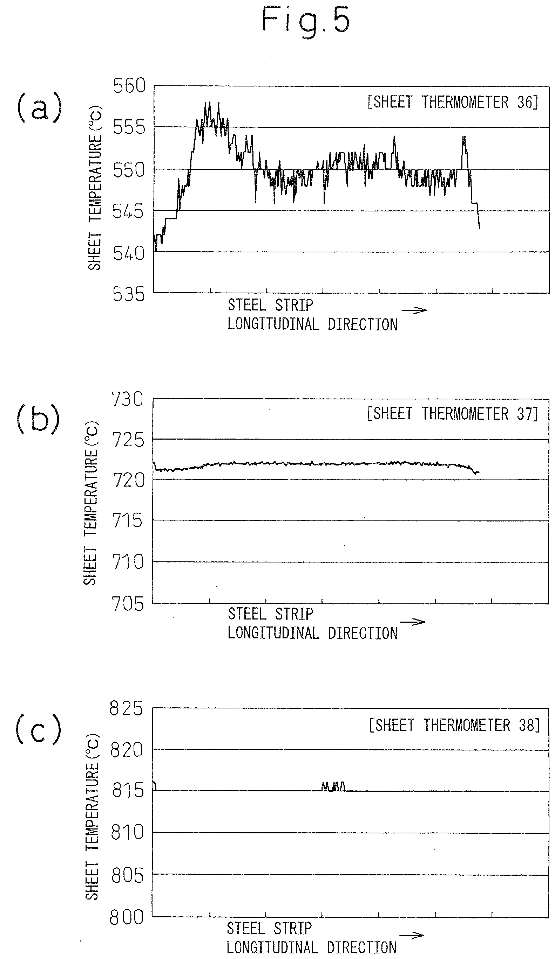

FIGS. 5(a) to (c) show an example of the temperature distribution in the longitudinal direction of one steel strip coil measured at the positions of the sheet thermometers 36, 37, and 38 at the exit sides of the heating regions 31A, 35, and 31B in the furnace 2 of the present invention.

As shown by the measurement data of the sheet thermometer 36 of FIG. 5(a), at the exit side of the heating region 31A using the radiant tube system, there is temperature unevenness of the steel strip. Despite this, by heating in accordance with the present invention, at the exit side of the solenoid coil type high frequency induction heating device 35, the temperature becomes substantially uniform like with the measurement data of the sheet thermometer 37 of FIG. 5(b). Further, at the exit side of the heating region 31B using a radiant tube system, the sheet temperature in the longitudinal direction of the steel strip is extremely stable without fluctuating much at all like with the measurement data of the sheet thermometer 38 of FIG. 5(c).

As a result, in the decarburization annealing of a grain-oriented silicon steel sheet, the steel strip can be annealed extremely uniformly in the longitudinal direction, so the quality of the obtained grain-oriented silicon steel sheet also becomes uniform. The decarburization becomes uniform and coating defects are almost all eliminated.

Further, when employing a solenoid coil type high frequency induction heating system, rapid heating by larger heat input becomes possible compared with heating by the radiant tube system.

In this example, that is, decarburization annealing of grain-oriented silicon steel, in the temperature range of 550°C to 720°C in the process of temperature elevation in the decarburization annealing, if controlling the heating rate to preferably 50°C/sec or more, preferably a range of 75 to 125°C/sec, electrical steel sheet having a B8 of 1.92T or more or a further higher flux density is obtained, so it is essential to take advantage of the features of a solenoid coil type high frequency induction heating system and make the heating temperature elevation rate 50°C/sec or more.

Note that, FIG. 4 shows an example having a nitriding region 33, but the present invention is not limited to a decarburization annealing facility of a cold rolled grain-oriented electrical steel sheet having a nitriding region and is also valid for a decarburization annealing facility not having a nitriding region.

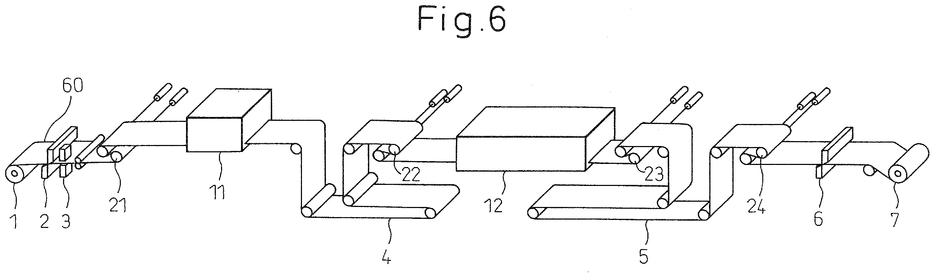

FIG. 6 is a schematic isometric projection of a typical continuous heat treatment facility for bright annealing a cold rolled sheet of ferrite type stainless steel. The main elements of the production line are similar to FIG. 1 except for the point of not having an annealing separating agent coater and dryer at the furnace exit side.

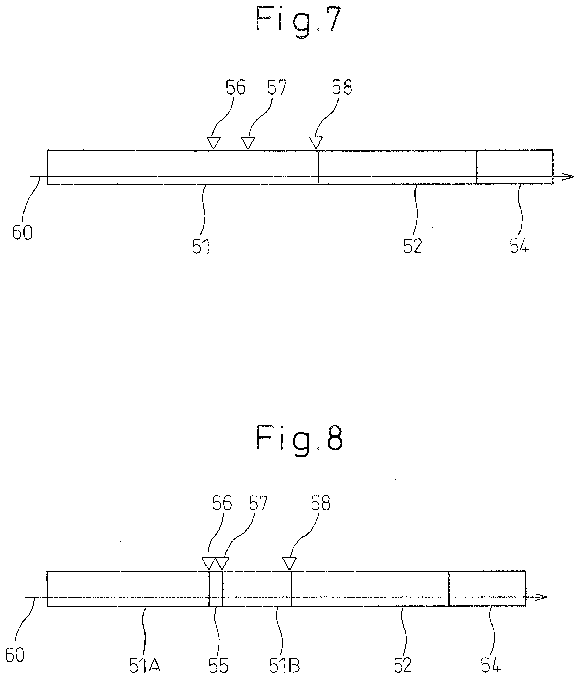

FIG. 7 is a view schematically showing a configuration according to the prior art of a furnace 12 by a cross-sectional view vertical to the longitudinal direction. The furnace 12 is generally configured by a heating region 51 using a muffle furnace system (indirect heating), a soaking region 52, and a cooling region 54. The heating region 51 is provided with sheet thermometers 56, 57, and 58 for monitoring the sheet temperature in the middle of the heating.

FIG. 8 is a view schematically showing the configuration of a furnace 12 of a continuous heat treatment facility (FIG. 6) for bright annealing of cold rolled ferrite type stainless steel of one example of the present invention by a cross-sectional view vertical to the longitudinal direction. Other than the furnace 12, the structure is the same as a conventional continuous annealing facility. Compared with the annealing line of the prior art of FIG. 7, the center of the heating zone is provided with a solenoid coil type high frequency induction heating device 55.

In the same way as the example of a decarburization annealing facility of electrical steel sheet, in a furnace configuration of the prior art, there was great fluctuation in the process of temperature elevation in the heating zone, but in the present invention, the sheet was heated to near the Curie point by a solenoid coil type high frequency induction heating furnace and it was possible to uniformly heat the steel strip in the longitudinal direction.

In the present invention, in this way, at the second heating zones 35, 55, a solenoid coil type high frequency induction heating means was used to heat the steel strip to a temperature region of Tc-30°C to Tc-5°C.

With solenoid coil type high frequency induction heating, as explained above, the magnetic permeability of the steel strip rapidly falls near the Curie point, so the heating ability rapidly declines.

Therefore, it is advantageous to use separate induction heating devices for heating at the former stage where the effect of changes in the magnetic permeability is small and the latter stage where the effect is large. Further, by doing this, there is also the advantage that the individual induction heating devices can be made smaller.

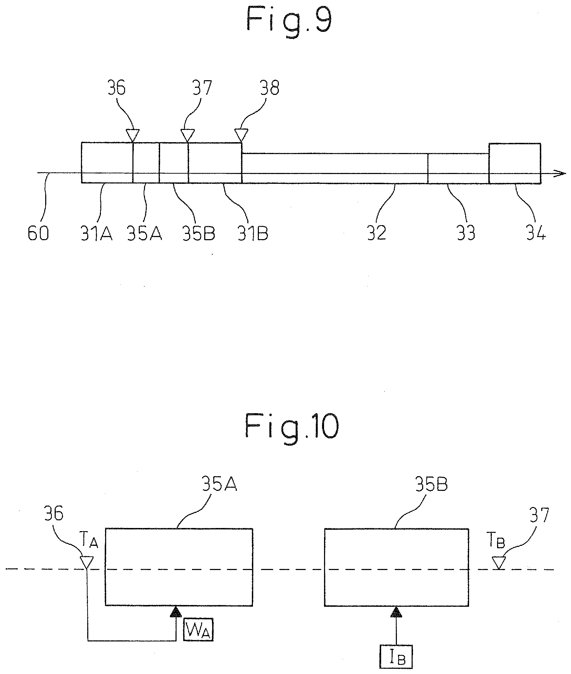

FIG. 9 shows an example of dividing the second heating zone 35 of FIG. 4 into a former stage and latter stage respectively provided with solenoid coil type high frequency induction heating devices 35A and 35B.

When raising the temperature of steel strip, in many cases strict control of the temperature elevation rate at the high temperature side (downstream side in running direction) is considered necessary. In such a case, at the downstream side solenoid coil type high frequency induction heating device 35B, a certain value (target value) of current is run through the coil and the temperature elevation rate of the steel is made to become constant by accurately controlling the temperature elevation rate, while at the upstream side solenoid coil type high frequency induction heating device 35A, it is sufficient to control the temperature of the steel strip at the entry side of the high frequency induction heating device 35B to become constant.

FIG. 10 shows an example of a control system of such a high frequency induction device.

This control system monitors a sheet thermometer 36 at the entry side of the upstream solenoid coil type high frequency induction heating device 35A to monitor the state of the radiant tube system heating region (former stage) 31A. Further, it computes the amount of heat of the heating required so that the sheet temperature of the steel sheet at the entry side of the most-downstream high frequency induction heating device 35B will become the target value and finds the set output power value WA of the upstream high frequency induction heating device 35A from that amount of heat. Further, it controls the upstream high frequency induction heating device 35A so that the actual output power value becomes the set power value WA and runs the steel strip through the most-downstream solenoid coil type high frequency induction heating device 35B while controlling the value of the current run through the coil so as to give the target current value IB.

Note that, the system monitors the exit side sheet thermometer 37, confirms that the sheet temperature of the exit side of the most-downstream high frequency induction heating device 35B has become constant, and then runs the steel strip.

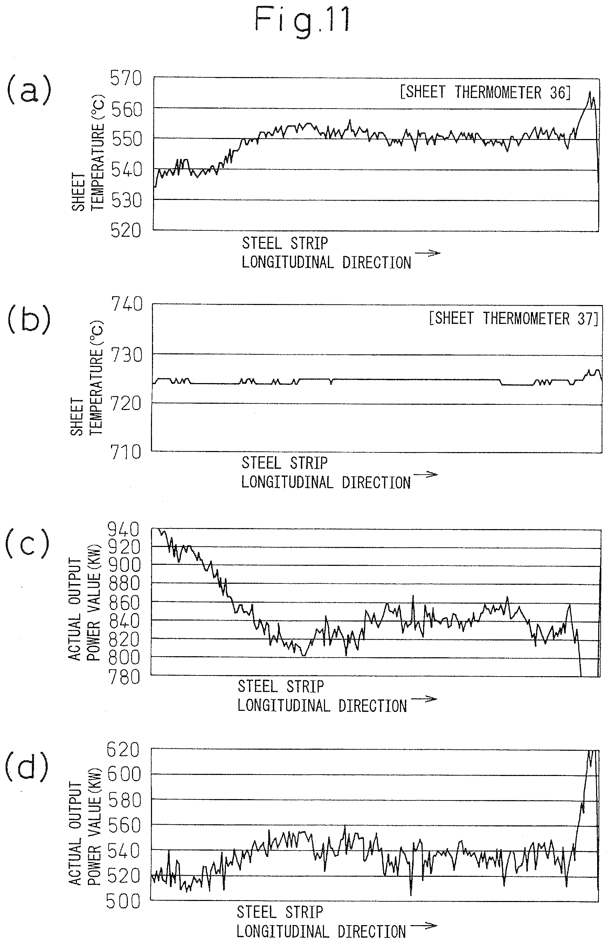

FIGS. 11(a) to (d) show examples of the temperature distribution in the longitudinal direction of one coil of steel strip measured at the positions of the sheet thermometers 36 and 37 at the exit sides of the heating regions 31A and 35B in the furnace 2 at that time and the actual output power values of the solenoid type high frequency induction heating devices 35A and 35B.

As shown in FIG. 11(a), at the exit side of the radiant tube system heating region 31A, the steel strip has uneven temperature, but at the exit side of the solenoid coil type high frequency induction heating device 35B, the temperature becomes substantially even as shown in FIG. 11(b).

However, the actual output power value of the downstream high frequency induction heating device 35B fluctuates as shown in FIG. 11(d). In the region where stricter control of the temperature elevation rate is required, the temperature elevation rate of the steel strip fluctuates.

This is guessed to be due to the fact that at the region where the sheet thermometer 36 of the entry side of the upstream high frequency induction heating device 35A shows a sheet temperature of 500 to 600°C, the emissivity of the steel sheet greatly fluctuates and even if using a sheet thermometer of the two-wavelength measurement type with a comparatively good measurement accuracy, the measurement accuracy is not that good.

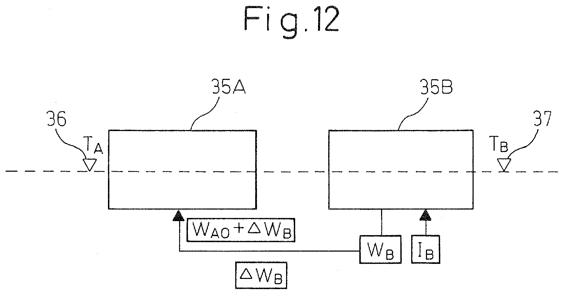

Next, the control system of another high frequency induction device able to more stably elevate the temperature is shown in FIG. 12.

The system runs the steel strip through the most-downstream high frequency induction heating device 35B while controlling the current run through the coil so as to give the target current value IB. It detects the actual output power value W_{B} of the most-downstream high frequency induction heating device 35B at that time, computes the difference ΔW_{B} between this actual output power value and the target output power value, corrects the set output power value W_{A0} of the high frequency heating device 35A upstream of the most-downstream high frequency induction heating device 35B so that the actual output power value becomes a constant value, and controls the current value of the high frequency heating device 35A so that the actual output power value of the high frequency heating device 35A becomes the corrected set output power value ΔW_{B}+W_{A0}.

Note that, the system monitors the entry side sheet thermometer 36 to monitor the state of the radiant tube system heating region (former stage) 31A and monitors the exit side sheet thermometer 37 to confirm that the sheet temperature at the exit side of the most-downstream solenoid coil type high frequency induction heating device 35B becomes constant and then runs the steel strip.

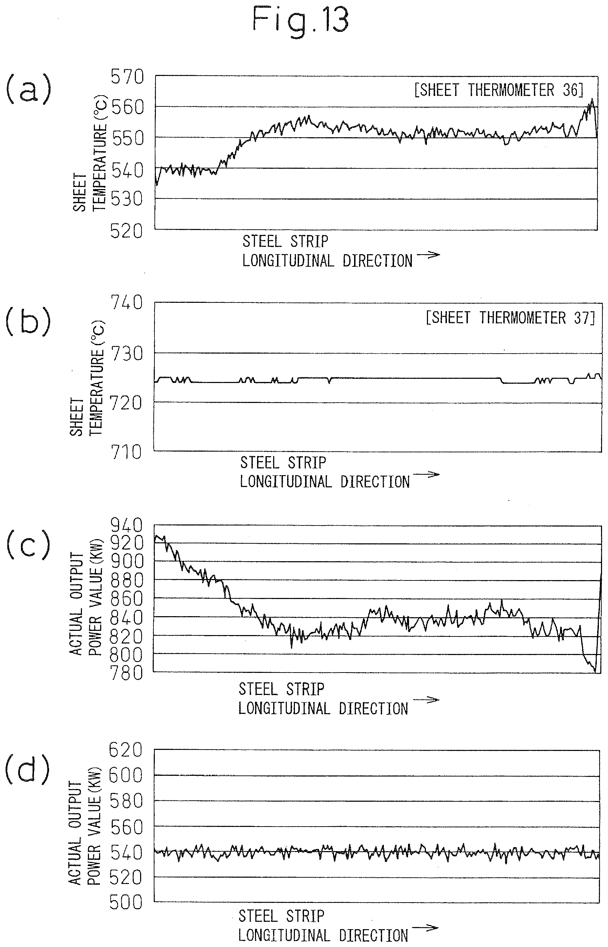

FIGS. 13(a) to (d) show examples of the temperature distribution in the longitudinal direction of one coil of steel strip measured at the positions of the sheet thermometers 36 and 37 at the exit sides of the heating regions 31A and 35B in the furnace 2 at that time and the actual output power values of the solenoid type high frequency induction heating devices 35A and 35B.

The target sheet temperature of the steel strip 60 at the boundary of the solenoid type high frequency induction heating devices 35A and 35B at that time was 680°C.

Note that, if the sheet temperature of the steel strip 60 at the exit side of the high frequency induction heating device 35B is less than Tc-30°C, it is guessed from the fluctuation of the actual output power value at the downstream high frequency induction heating device 35B that the temperature of the steel strip varies inside it and it is not possible to effectively control the solenoid coil type high frequency induction heating device 35A to give a constant output power value.

According to this control system, despite the fact that at the exit side of the radiant tube system heating region 31A, as shown in FIG. 13(a), the steel strip is uneven in temperature, at the exit side of the downstream solenoid coil type high frequency induction heating device 35B, as shown in FIG. 13(b), the temperature becomes substantially even. Further, the actual output power value of the solenoid type high frequency induction heating device 35B is extremely stable without fluctuating much at all as shown in FIG. 13(d).

Accordingly, with this control system, the rate of temperature elevation of the steel strip 60 in the downstream solenoid type high frequency induction heating device 35B is constant and very stable without fluctuating much at all.

In the above explanation of the control system, two induction heating devices were provided, but the number of induction heating devices is not limited to two and may be any number.

Further, in the control system shown in FIG. 12, it is sufficient to arrange a high frequency induction heating device designed to give a constant output power value in accordance with the temperature region where an extremely strict rate of temperature elevation of the steel strip is demanded. The invention is not limited to the most-downstream position of the second heating zone.

Note that, the steel strip having a Curie point covered by the present invention is not limited to, as illustrated here, a cold rolled steel strip of a grain-oriented electrical steel sheet or a cold rolled steel strip of a ferrite type stainless steel sheet. The invention is applicable to all steel strips having a Curie point.

Further, the grain-oriented electrical steel sheet containing Si≤4.5 mass% covered by the present invention need only be, for example, one of a system of ingredients like the grain-oriented electrical steel sheet disclosed in Japanese Patent Publication (A) No. 2002-060842, Japanese Patent Publication (A) No. 2002-173715, etc. The present invention does not particularly limit the system of ingredients.

Further, as the ferrite type stainless steel sheet containing Cr≤18 mass% covered by present invention, JIS G 4305 SUS430, SUS430J1L, or other standard steel types or ingredient systems such as the ferrite type stainless steel sheet disclosed in Japanese Patent Publication (A) No. 05-293595, Japanese Patent Publication (A) No. 06-002044, Japanese Patent Publication (A) No. 07-118754, etc. may be used. The present invention does not particularly limit the ingredient system.

Further, as the martensite type stainless steel sheet containing Cr≤18 mass% covered by the present invention, JIS G 4305 SUS410, SUS420J1, or other standard steel types or ingredient systems such as the martensite type stainless steel sheet disclosed in Japanese Patent Publication (A) No. 07-268561 and Japanese Patent Publication (A) No. 08-199310 may be used. The present invention does not particularly limit the ingredient system.

Note that, the means for heating the steel strip to less than Tc-50°C is not limited to a radiant tube system. All radiant heating means using indirect gas heating or direct gas heating and/or radiant heating means using electric heaters and/or heating means using induction heating devices are effective. Further, the system for heating from the temperature region near the Curie point of Tc-30°C to Tc-5°C to the treatment target temperature is also not limited to an electric heater heating system. All radiant heating means using indirect gas heating or direct gas heating and/or radiant heating means using electric heaters are effective. Further, in general, Tc-30°C exceeds 700°C. In this region, the steel sheet emissivity becomes large in absolute value and is no longer governed by the state of the surface of the comparative sheet, so the sheet thermometer rises in measurement accuracy and the temperature of the steel sheet becomes easier to control, so with Tc-30 or more, the heating system is not that much of an issue.

### EXAMPLES

### (Example 1)

A steel slab containing, by mass%, C: 0.06%, Si: 3.3%, Mn: 0.1%, P: 0.03%, S: 0.008%, acid soluble Al: 0.028%, N: 0.008%, and Cr: 0.1% was heated at a temperature of 1150°C, then hot rolled to a sheet thickness of 2.3 mm to obtain a steel strip coil, then was annealed by two stages of annealing temperatures of 1120°C and 920°C. Further, this was cold rolled to a sheet thickness of 0.22 mm by a reverse roller, then was decarburization annealed by a prior art decarburization annealing facility (FIG. 1 and FIG. 2) and by a decarburization annealing facility of the present invention (FIG. 1 and FIG. 4). After that, this was annealed at a high temperature and finally was smooth annealed. At that time, the steel sheet temperature at the heating region exit side of the furnace 12 was measured by the sheet temperature thermometer 38 and the smooth annealed grain-oriented electrical steel sheet was measured for the coating defect rate. Table 1 shows the test conditions and test results. Note that the start temperature of the induction heating was made Tc-A (°C) and the end temperature was made Tc-B (°C). In the table, these were shown by the values of A and B. Further, as the item for evaluation of the stability of quality in the coil longitudinal direction, since continuous measurement of the decarburization ability is difficult, the coating defect rate (area ratio of defects), which can be continuously measured, was measured.

In Invention Examples 1 and 2, there were almost no fluctuations in the steel sheet temperatures by the sheet thermometers. Further, as a result, it was learned that the coating defect rates of the steel sheets were extremely small.

On the other hand, in Comparative Example 11 where the induction heating end temperature was too high, the steel sheet did not reach the target temperature and could not satisfy the test conditions. Further, in Comparative Example 12 where the induction heating end temperature was too low and in Comparative Examples 13 and 14 where the induction heating start temperatures were high, the fluctuations in steel sheet temperatures continued to not be small and a result the coating defect rates of the steel sheets were high. Note that, Comparative Example 15 which did not use induction heating had a large variation in steel sheet temperature and an extremely large coating defect rate of the steel sheet.

**Table 1**

| | | Furnace configuration | Induction heating | | Temp. range of sheet thermometer (38) (max. value-min. value) (°C) | Coating defect rate (% ) | Remarks |
|---|---|---|---|---|---|---|---|
| | | | Start temp. target value (A) (°C) | End temp. target value (°C) | | | |
| Inv. ex. | 1 | FIG. 4 | 60 | 5 | 2 | 0.2 | |
| | 2 | FIG. 4 | 60 | 20 | 3 | 0.1 | |
| Comp. ex. | 11 | FIG. 4 | 60 | 3 | ---- | ---- | Does not reach target temperature |
| | 12 | FIG. 4 | 60 | 35 | 16 | 4.8 | |
| | 13 | FIG. 4 | 40 | 5 | 13 | 2.5 | |
| | 14 | FIG. 4 | 40 | 20 | 14 | 3.0 | |
| | 15 | FIG. 2 | ---- | ---- | 20 | 6.0 | |

### [Example 2]

A slab containing, by mass%, C: 0.005%, Si: 0.1%, Mn: 0.1%, Cr: 15%, P: 0.02%, S: 0.01%, and N: 0.01% was heated at a temperature of 1200°C, then hot rolled to a sheet thickness of 5 mm to obtain a steel strip coil, then annealed at 900°C. Further, it was cold rolled to a 2 mm thickness by a reverse roller, then was bright annealed at 950°C by a prior art system (FIG. 6 and FIG. 7) and by a system according to the present invention (FIG. 6 and FIG. 8) at the annealing facility. At that time, the steel sheet temperature at the heating region exit side of the furnace 12 was measured and the obtained ferrite type stainless steel sheet was measured for the hardness after bright annealing and measured for the failure rate of strength. Table 2 shows the test conditions and results (target values A and B are similar to those of Table 1).

In Invention Examples 21 and 22, there were almost no fluctuations in the steel sheet temperatures. Further, as a result, it was learned that the fluctuations in mechanical strength of the steel sheets became extremely small and there were almost no failing parts.

On the other hand, in Comparative Example 31 where the induction heating end temperature was too high, the steel sheet did not reach the target temperature and could not satisfy the test conditions. Further, in Comparative Example 32 where the induction heating end temperature was too low and in Comparative Examples 33 and 34 where the induction heating start temperatures were high, the fluctuations in the ratios of parts of the steel sheets failing in mechanical strength (insufficient heating) were large. Note that, Comparative Example 35 which did not use induction heating had an extremely large ratio of parts of the steel sheet failing in mechanical strength (insufficient heating).

**Table 2**

| | | Furnace configuration | Induction heating | | Temp. range of sheet thermometer (38) (max. value-min. value) (°C) | Coating defect rate (%) | Remarks |
|---|---|---|---|---|---|---|---|
| | | | Start temp. target value (A) (°C) | End temp. target value (B) (°C) | | | |
| Inv. ex. | 21 | FIG. 8 | 60 | 10 | 2 | 0 | |
| | 22 | FIG. 8 | 60 | 20 | 2 | 0 | |
| Comp. ex. | 31 | FIG. 8 | 60 | 3 | ---- | ---- | Does not reach target temperature |
| | 32 | FIG. 8 | 60 | 35 | 13 | 6 | |
| | 33 | FIG. 8 | 30 | 5 | 8 | 3 | |
| | 34 | FIG. 8 | 30 | 20 | 10 | 4 | |
| | 35 | FIG. 7 | ---- | ------ | 18 | 9 | |

According to the present invention, when heating a steel strip having a Curie point to an annealing temperature exceeding the Curie point, extremely uniform heating can be carried out in the longitudinal direction of the steel strip.

When continuously annealing a cold rolled steel strip of a grain-oriented silicon steel sheet, a ferrite type stainless steel strip, a martensite type stainless steel strip, and the like, strict control and uniformity in the rate of temperature elevation in the steel sheet are sought. By application of the present invention in such continuous annealing of a steel strip, a large effect of improvement of quality due to increased uniformity of the annealing temperature can be obtained and a product with stable quality can be produced. Therefore, the industrial effect of the present invention is immeasurable.

## Claims

1. A method of continuously annealing a steel strip having a Curie point by an annealing temperature exceeding the Curie point at a continuous annealing facility comprising a heating zone (51), soaking zone (52), and cooling zone (54), or a heating zone(31), soaking zone (32), nitriding zone (33), and cooling zone (34), which method of continuously annealing a steel strip having a Curie point **characterized by** dividing heat treatment at the heating zone(31, 51) into a first to third, that is, three regions,
in a first heating zone (31A, 51A), using radiant heating means using indirect gas heating or direct gas heating and/or radiant heating means using electric heaters to heat the steel strip to a temperature in the range from 500°C to less than the Curie point Tc (°C) - 50°C,
in a following second heating zone (35, 55), heating the heated steel strip by a plurality of solenoid coil type high frequency induction heating means (35A, 35B) at a heating rate of 50°C/sec or more to a temperature region of Tc-30°C to Tc-5°C, and simultaneously controlling the plurality of solenoid coil type high frequency induction heating means (35A 35B) so that an output current value of an induction heating means (35B) of a most-downstream control region becomes a target value and controlling them by detecting an actual output power value of the induction heating means (35B) of the most-downstream control region, computing a difference between the detected actual output power value and the target output power value, and using the computed difference of power values to correct set output power values of the induction heating devices (35A) arranged upstream of the most-downstream control region so that the actual output power values of the induction heating devices (35A) arranged upstream of the most-downstream control region become the corrected set output power values and thereby making a rate of temperature elevation of the steel strip near the Curie point constant, and
in a final third heating zone (31B, 51B), heating the heated steel strip by radiant heating means using indirect gas heating or direct gas heating and/or radiant heating means using electric heaters to the treatment target temperature exceeding the Curie point,
wherein the steel strip having a Curie point is a cold rolled grain-oriented electrical steel sheet containing Si≤4.5 mass%, or a cold rolled ferrite type stainless steel sheet or martensite type stainless steel sheet containing Cr≤18 mass%.

2. A continuous annealing facility for continuously annealing a steel strip having a Curie point by an annealing temperature exceeding the Curie point comprising a heating zone (51), soaking zone (52), and cooling zone (54), or a heating zone (31), soaking zone (32), nitriding zone(33), and cooling zone (34), said continuous annealing facility for a steel strip having a Curie point **characterized by** dividing the heating zone into a first to third, that is, three regions,
a first heating zone (31A, 51A) being provided with radiant heating means using indirect gas heating or direct gas heating and/or radiant heating means using electric heaters for heating the steel strip from 500°C to less than Tc-50°C,
a second heating zone (35,55) being provided with a plurality of solenoid coil type high frequency induction heating means (35A 35B) for heating the steel strip heated at the first heating zone to a temperature region of Tc-30°C to Tc-5°C, and
a third heating zone (31B, 51B) being provided with radiant heating means using indirect gas heating or direct gas heating and/or radiant heating means using electric heaters for heating the steel strip heated at the second heating zone to a treatment target temperature exceeding the Curie point,
control means for controlling the plurality of solenoid coil type high frequency induction heating means (35A, 35B) so that an output current value of an induction heating means (35B) of a most-downstream control region among the plurality of solenoid coil type high frequency induction heating means (35A, 35B) becomes a target value, detecting means for detecting an actual output power value of the induction heating means (35B) of the most-downstream control region, processing means for computing a difference between the detected actual output power value and the target output power value and using the computed difference of power values to correct set output power values of the induction heating devices (35A) arranged upstream of the most-downstream control region, and control means for control so that the actual output power values of the induction heating devices (35A) arranged upstream of the most-downstream control region become the corrected set output power values and thereby making a rate of temperature elevation of the steel strip near the Curie point constant,
wherein the steel strip having a Curie point is a cold rolled grain-oriented electrical steel sheet containing Si≤4.5 mass%, or a cold rolled ferrite type stainless steel sheet or martensite type stainless steel sheet containing Cr≤18 mass%.

## Patentansprüche

1. Verfahren zum Durchlaufglühen eines Stahlbands mit einem Curie-Punkt mit einer den Curie-Punkt übersteigenden Glühtemperatur in einer Durchlaufglühanlage mit einer Heizzone (51), Durchwärmzone (52) und Kühlzone (54) oder einer Heizzone (31), Durchwärmzone (32), Nitrierzone (33) und Kühlzone (34), wobei das Verfahren zum Durchlaufglühen eines Stahlbands mit einem Curie-Punkt **gekennzeichnet ist durch** Aufteilen der Wärmebehandlung in der Heizzone (31, 51) in einen ersten bis dritten Bereich, d. h. drei Bereiche,
in einer ersten Heizzone (31A, 51A) mit Hilfe einer Strahlungsheizeinrichtung unter Verwendung von indirekter Gasheizung oder direkter Gasheizung und/oder einer Strahlungsheizeinrichtung unter Verwendung von Elektroheizungen erfolgendes Erwärmen des Stahlbands auf eine Temperatur im Bereich von 500 °C bis unter den Curie-Punkt Tc (°C) - 50 °C,
in einer folgenden zweiten Heizzone (35, 55) erfolgendes Erwärmen des erwärmten Stahlbands durch mehrere hochfrequente Magnetspulen-Induktionsheizeinrichtungen (35A, 35B) mit einer Heizgeschwindigkeit von mindestens 50 °C/s auf einen Temperaturbereich von Tc - 30 °C bis Tc - 5 °C und gleichzeitiges Steuern der mehreren hochfrequenten Magnetspulen-Induktionsheizeinrichtungen (35A, 35B), so dass ein Ausgangsstromwert einer Induktionsheizeinrichtung (35B) eines am weitesten nachgelagerten Steuerbereichs einen Sollwert annimmt, und Steuern derselben durch Detektieren eines Ist-Ausgangsleistungswerts der Induktionsheizeinrichtung (35B) des am weitesten nachgelagerten Steuerbereichs, Berechnen einer Differenz zwischen dem detektierten Ist-Ausgangsleistungswert und dem Soll-Ausgangsleistungswert, und Verwenden der berechneten Differenz von Leistungswerten, um eingestellte Ausgangsleistungswerte der Induktionsheizvorrichtungen (35A) zu korrigieren, die dem am weitesten nachgelagerten Steuerbereich vorgelagert angeordnet sind, so dass die Ist-Ausgangsleistungswerte der Induktionsheizvorrichtungen (35A), die dem am weitesten nachgelagerten Steuerbereich vorgelagert angeordnet sind, die korrigierten eingestellten Ausgangsleistungswerte annehmen, und dadurch erfolgendes Konstanthalten einer Temperaturanstiegsgeschwindigkeit des Stahlbands nahe dem Curie-Punkt, und
in einer abschließenden dritten Heizzone (31B, 51B) erfolgendes Erwärmen des erwärmten Stahlbands durch eine Strahlungsheizeinrichtung unter Verwendung von indirekter Gasheizung oder direkter Gasheizung und/oder einer Strahlungsheizeinrichtung unter Verwendung von Elektroheizungen auf die den Curie-Punkt übersteigende Soll-Behandlungstemperatur,
wobei das Stahlband mit einem Curie-Punkt ein kaltgewalztes kornorientiertes Elektrostahlblech ist, das Si ≤ 4,5 Masse-% enthält, oder ein kaltgewalztes Ferrit-Edelstahlblech oder Martensit-Edelstahlblech ist, das Cr ≤ 18 Masse-% enthält.

2. Durchlaufglühanlage zum Durchlaufglühen eines Stahlbands mit einem Curie-Punkt mit einer den Curie-Punkt übersteigenden Glühtemperatur mit einer Heizzone (51), Durchwärmzone (52) und Kühlzone (54) oder einer Heizzone (31), Durchwärmzone (32), Nitrierzone (33) und Kühlzone (34), wobei die Durchlaufglühanlage für ein Stahlband mit einem Curie-Punkt **dadurch gekennzeichnet ist, dass** die Heizzone in einen ersten bis dritten Bereich, d. h. drei Bereiche, aufgeteilt ist,
wobei eine erste Heizzone (31A, 51A) versehen ist mit einer Strahlungsheizeinrichtung unter Verwendung von indirekter Gasheizung oder direkter Gasheizung und/ oder einer Strahlungsheizeinrichtung unter Verwendung von Elektroheizungen zum Erwärmen des Stahlbands von 500 °C auf unter Tc - 50 °C,
eine zweite Heizzone versehen ist mit mehreren hochfrequenten Magnetspulen-Induktionsheizeinrichtungen (35A, 35B) zum Erwärmen des in der ersten Heizzone erwärmten Stahlbands auf einen Temperaturbereich von Tc - 30 °C bis Tc - 5 °C und
eine dritte Heizzone (31B, 51B) versehen ist mit einer Strahlungsheizeinrichtung unter Verwendung von indirekter Gasheizung oder direkter Gasheizung und/oder einer Strahlungsheizeinrichtung unter Verwendung von Elektroheizungen zum Erwärmen des in der zweiten Heizzone erwärmten Stahlbands auf eine den Curie-Punkt übersteigende Soll-Behandlungstemperatur,
einer Steuereinrichtung zum Steuern der mehreren hochfrequenten Magnetspulen-Induktionsheizeinrichtungen (35A, 35B), so dass ein Ausgangsstromwert einer Induktionsheizeinrichtung (35B) eines am weitesten nachgelagerten Steuerbereichs unter den mehreren hochfrequenten Magnetspulen-Induktionsheizeinrichtungen (35A, 35B) einen Sollwert annimmt, einer Detektionseinrichtung zum Detektieren eines Ist-Ausgangsleistungswerts der Induktionsheizeinrichtung (35B) des am weitesten nachgelagerten Steuerbereichs, einer Verarbeitungseinrichtung zum Berechnen einer Differenz zwischen dem detektierten Ist-Ausgangsleistungswert und dem Soll-Ausgangsleistungswert und Verwenden der berechneten Differenz von Leistungswerten, um eingestellte Ausgangsleistungswerte der Induktionsheizvorrichtungen (35A) zu korrigieren, die dem am weitesten nachgelagerten Steuerbereich vorgelagert angeordnet sind, und einer Steuereinrichtung zur Steuerung, so dass die Ist-Ausgangsleistungswerte der Induktionsheizvorrichtungen (35A), die dem am weitesten nachgelagerten Steuerbereich vorgelagert angeordnet sind, die korrigierten eingestellten Ausgangsleistungswerte annehmen, und dadurch erfolgendes Konstanthalten einer Temperaturanstiegsgeschwindigkeit des Stahlbands nahe dem Curie-Punkt,
wobei das Stahlband mit einem Curie-Punkt ein kaltgewalztes kornorientiertes Elektrostahlblech ist, das Si ≤ 4,5 Masse-% enthält, oder ein kaltgewalztes Ferrit-Edelstahlblech oder Martensit-Edelstahlblech ist, das Cr ≤ 18 Masse-% enthält.

## Revendications

1. Procédé de recuit continu d'une bande d'acier ayant un point de Curie par une température de recuit excédant le point de Curie sur une installation de recuit continu comprenant une zone de chauffage (51), une zone d'immersion (52), et une zone de refroidissement (54), ou une zone de chauffage (31), une zone d'immersion (32), une zone de nitruration (33), et une zone de refroidissement (34), lequel procédé de recuit continu d'une bande d'acier ayant un point de Curie **caractérisé par** une division de traitement thermique sur la zone de chauffage (31, 51) en de première à troisième, c'est-à-dire trois régions,
dans une première zone de chauffage (31A, 51A), utilisant un moyen de chauffage rayonnant utilisant un chauffage au gaz indirect ou un chauffage au gaz direct et/ou un moyen de chauffage rayonnant utilisant des dispositifs de chauffage électriques pour chauffer la bande d'acier à une température dans l'intervalle de 500°C à moins du point de Curie Tc(°C) - 50°C,
dans une seconde zone de chauffage suivante (35, 55), le chauffage de la bande d'acier chauffée par plusieurs moyens de chauffage par induction haute fréquence de type bobine de solénoïde (35A, 35B) à une vitesse de chauffage de 50°C/s ou supérieure dans une région de température de Tc - 30°C à Tc - 5°C, et le contrôle simultané des plusieurs moyens de chauffage par induction haute fréquence de type bobine de solénoïde (35A, 35B) de sorte qu'une valeur de courant de sortie d'un moyen de chauffage par induction (35B) d'une région de contrôle la plus en aval devienne une valeur cible et le contrôle de ceux-ci par détection d'une valeur de puissance de sortie réelle des moyens de chauffage par induction (35B) de la région de contrôle la plus en aval, le calcul d'une différence entre la valeur de puissance de sortie réelle détectée et la valeur de puissance de sortie cible, et l'utilisation de la différence calculée des valeurs de puissances pour corriger des valeurs de puissances de sortie réglées des dispositifs de chauffage par induction (35A) disposés en amont de la région de contrôle la plus en aval de sorte que les valeurs de puissances de sortie réelles des dispositifs de chauffage par induction (35A) disposés en amont de la région de contrôle la plus en aval deviennent les valeurs de puissances de sortie réglées corrigées et la réalisation par-là d'un taux d'élévation de température de la bande d'acier à proximité de la constante de point de Curie, et
dans une troisième zone finale de chauffage (31B, 51B), le chauffage de la bande d'acier chauffée par un moyen de chauffage rayonnant en utilisant un chauffage au gaz indirect ou un chauffage au gaz direct et/ou des moyens de chauffage rayonnant utilisant des dispositifs de chauffage électriques jusqu'à la température cible de traitement excédant le point de Curie,
dans lequel la bande d'acier ayant un point de Curie est une tôle d'acier électrique à grains orientés laminée à froid contenant Si ≤ 4,5 % en masse, ou une tôle d'acier inoxydable de type ferrite laminée à froid ou une tôle d'acier inoxydable de type martensite contenant Cr ≤ 18 % en masse.

2. Installation de recuit continu pour un recuit continu d'une bande d'acier ayant un point de Curie par une température de recuit excédant le point de Curie comprenant une zone de chauffage (51), une zone d'immersion (52), et une zone de refroidissement (54), ou une zone de chauffage (31), une zone d'immersion (32), une zone de nitruration (33), et une zone de refroidissement (34), ladite installation de recuit continu pour une bande d'acier ayant un point de Curie **caractérisée par** une division de la zone de chauffage en de première à troisième, c'est-à-dire trois régions,
une première zone de chauffage (31A, 51A) étant munie de moyens de chauffage rayonnant utilisant un chauffage au gaz indirect ou un chauffage au gaz direct et/ou de moyens de chauffage rayonnant utilisant des dispositifs de chauffage électriques pour chauffer la bande d'acier de 500°C à moins de Tc - 50°C,
une seconde zone de chauffage (35, 55) étant munie de plusieurs moyens de chauffage par induction haute fréquence de type bobine de solénoïde (35A, 35B) pour chauffer la bande d'acier chauffée dans la première zone de chauffage jusqu'à une région de température de Tc - 30°C à Tc - 5°C, et
une troisième zone de chauffage (31B, 51B) étant munie d'un moyen de chauffage rayonnant utilisant un chauffage au gaz indirect ou un chauffage au gaz direct et/ou un moyen de chauffage rayonnant utilisant des dispositifs de chauffage électriques pour chauffer la bande d'acier chauffée dans la deuxième zone de chauffage jusqu'à une température cible de traitement excédant le point de Curie,
un moyen de contrôle pour contrôler les plusieurs moyens de chauffage par induction haute fréquence de type bobine de solénoïde (35A, 35B) de sorte qu'une valeur de courant de sortie d'un moyen de chauffage par induction (35B) d'une région de contrôle la plus en aval parmi les plusieurs moyens de chauffage par induction haute fréquence de type bobine de solénoïde (35A, 35B) devienne une valeur cible, un moyen de détection pour détecter une valeur de puissance de sortie réelle du moyen de chauffage par induction (35B) de la région de contrôle la plus en aval, un moyen de traitement pour calculer une différence entre la valeur de puissance de sortie réelle détectée et la valeur de puissance de sortie cible et l'utilisation de la différence calculée des valeurs de puissances pour corriger les valeurs de puissances de sortie réglées des dispositifs de chauffage par induction (35A) disposés en amont de la région de contrôle la plus en aval, et un moyen de contrôle pour contrôler de sorte que les valeurs de puissances de sortie réelles des dispositifs de chauffage par induction (35A) disposés en amont de la région de contrôle la plus en aval deviennent les valeurs de puissances de sortie réglées corrigées et la réalisation par-là d'un taux d'élévation de température de la bande d'acier à proximité de la constante de point de Curie,
dans laquelle la bande d'acier présentant un point de Curie est une tôle d'acier électrique à grains orientés laminée à froid contenant Si ≤ 4,5 % en masse, ou une tôle d'acier inoxydable de type ferrite laminée à froid ou une tôle d'acier inoxydable de type martensite contenant Cr ≤ 18 % en masse.
